# EUROPÄISCHE PATENTSCHRIFT

(11) **EP 2 641 786 B1**
(45) Veröffentlichungstag und Bekanntmachung des Hinweises auf die Patenterteilung: **27.04.2016**
(21) Anmeldenummer: 13156127.6
(22) Anmeldetag: 21.02.2013
(51) Int. Cl.: B60R 21/2165

(54) **Innenausstattungsteil, insbesondere Instrumententafel mit einer Airbagklappe**
Interior trim part, in particular instrument panel comprising an airbag flap
Pièce d'équipement intérieur, en particulier tableau de bord avec clapet d'airbag

(30) Priorität: 20.03.2012 DE 102012204392
(43) Veröffentlichungstag der Anmeldung: 25.09.2013
(73) Patentinhaber: Lisa Dräxlmaier GmbH, 84137 Vilsbiburg (DE)
(72) Erfinder: Fischer, Dr. Wolfgang, 84405 Dorfen (DE); Huber, Bernhard, 84307 Eggenfelden (DE); Maierthaler, Joachim, 84036 Obergangkofen (DE)

(56) Entgegenhaltungen:
- WO-A1-00/54952
- DE-A1- 10 164 761
- DE-A1-102007 046 155
- DE-A1-102009 054 614
- DE-U1-202004 017 029

## Beschreibung

Die vorliegende Erfindung betrifft ein Innenausstattungsteil, insbesondere eine Instrumententafel für Fahrzeuge und hier insbesondere Kraftfahrzeuge. Im Besonderen betrifft die vorliegende Erfindung dabei die Ausbildung einer Airbagklappe in einem spritzgegossenen steifen Träger mit einer Vorder- und Rückseite des Innenausstattungsteils, wozu wenigstens eine Nut auf der Rückseite des Trägers vorgesehen ist, entlang derer der Träger zur Bildung der Airbagklappe aufbrechbar ist, wobei der Nutgrund der Nut in einem Abstand zur Vorderseite des Trägers liegt.

Derartige Nuten wurden im Stand der Technik nach dem Herstellen des Trägers in einem Spritzgießwerkzeug und nach Entnahme aus dem Spritzgießwerkzeug eingebracht, so dass die Nut den Träger nicht vollständig durchdringt. Eine solche Airbagabdeckung ist beispielsweise in der DE 10 2009 048 893 A1 offenbart.

Alternativ war es auch bekannt, zur Bildung einer Airbagklappe eine Nut vorzusehen, die den Träger vollständig durchdringt, so dass diese werkzeugfallend mit eingebracht werden konnten, wie es beispielsweise die US-A-2004/0164531 beschreibt. Ein Innenausstattungsteil mit den Merkmalen im Oberbegriff von Anspruch 1 ist aus der DE 20 2004 017 029 U1 bekannt.

Den Träger vollständig durchdringende Nuten sind in der Regel deshalb nicht wünschenswert, weil derartige Nuten zum Einfallen darüber angeordneter Haptik- und/oder Dekorschichten führen, so dass die Nuten auch im verbauten Zustand im Dekor sichtbar werden.

Die Schwächung des Trägers auf Restwandstärke, das heißt mit einer Nut, deren Nutgrund in einem Abstand zur Vorderseite des Trägers endet, musste bisher in einem nachträglichen zusätzlichen Verfahrensschritt eingebracht werden, was die Herstellungszeit und damit die Kosten des Bauteils negativ beeinflusst.

Vor diesem Hintergrund bestand die Aufgabe der vorliegenden Erfindung darin, ein Innenausstattungsteil der eingangs genannten Art derart weiter zu bilden, dass eine Nut zur Ausbildung einer Airbagklappe im verbauten Zustand unsichtbar bleibt und die Herstellungszeit und -kosten vermindert werden können.

Diese Aufgabe wird durch ein Innenausstattungsteil mit den Merkmalen des Anspruchs 1 gelöst. Vorteilhafte Weiterbildungen der vorliegenden Erfindung finden sich in den Unteransprüchen, der folgenden Beschreibung sowie den Zeichnungen.

Der vorliegenden Erfindung liegt der Gedanke zu Grunde, das Innenausstattungsteil zumindest im Bereich der zur Bildung der Airbagklappe vorgesehenen Nut aus einem vergleichbar steifen aber porösen Material zu bilden, um das Aufbrechverhalten des Trägers zur Bildung der Airbagklappe positiv zu beeinflussen, wodurch die Restwandstärke, das heißt der Abstand zwischen Nutgrund und der Vorderseite des Trägers größer gestaltet werden kann und noch immer ein ausreichendes und zuverlässiges Bruchverhalten erzielbar ist. Darüber hinaus ist es durch die damit verbundene Verbesserung des Wandstärken-Rippen-Verhältnisses möglich, die Nut werkzeugfallend beim Spritzgießen des Trägers mit auszuformen, so dass nachträgliche Bearbeitungsschritte entfallen können und damit die Kosten reduziert werden. Dies wird vorteilhafterweise durch Verwendung eines thermoplastischen Schaumgießverfahrens unterstützt, bei dem die Wandstärken-Rippen-Verhältnisse anders als beim Kompaktspritzguss größer sein können.

Dementsprechend schlägt die vorliegende Erfindung ein Innenausstattungsteil, insbesondere eine Instrumententafel, für Fahrzeuge und insbesondere Kraftfahrzeuge vor. Dennoch ist es prinzipiell auch denkbar, die vorliegende Erfindung auf andere Innenausstattungsteile als die Instrumententafel zu übertragen. Das erfindungsgemäße Innenausstattungsteil umfasst einen spritzgegossenen steifen Träger mit einer Vorder- und Rückseite. Bei dem Träger handelt es sich vorzugsweise um einen Kunststoffträger aus Polypropylen (PP), ABS (Acrylnitril-Butadien-Styrol) oder anderen, vorzugsweise vergleichbaren thermoplastischen Kunststoffen. Der Träger ist vorteilhafterweise ein thermoplastisches Schaumgussteil, das heißt im TSG-Verfahren hergestellt. Dabei kann der Träger in einem physikalischen oder chemischen thermoplastischen Schaumgussverfahren hergestellt sein. Das physikalische thermoplastische Schaumgussverfahren, bei dem beim Spritzgießen ein Gas in die Kunststoffschmelze eingebracht wird, ist jedoch bevorzugt, da die Steuerbarkeit der Fertigung gegenüber dem chemischen Schaumgussverfahren, bei dem das Gas bereits im Kunststoffgranulat enthalten ist, besser ist und dadurch die Prozesssicherheit verbessert wird. Unter das physikalische thermoplastische Schaumgießverfahren fällt insbesondere auch das sogenannte MuCell^{®}-Verfahren, bei dem Stickstoff oder Kohlendioxid in die Schmelze eingebracht wird. Die Verwendung solcher thermoplastischer Schaumgießverfahren ist eine Möglichkeit, den Träger mit einer geschlossenen Außenhaut auf der Vorder- und Rückseite und zumindest bereichsweise einem geschäumten Kern auszugestalten. Dabei ist der geschäumte Kern vorzugsweise mikrozellular aufgebaut, das heißt es befinden sich einzelne Zellen im Kern, die im Mikrometerbereich liegen. Ein thermoplastisches Schaumgießverfahren ist beispielsweise in der WO 00/54952 beschrieben. Entsprechende Vorrichtungen sind beispielsweise von der Firma Trexel, Inc., Wilmington, USA erhältlich.

Ferner ist erfindungsgemäß auf der Rückseite des Trägers wenigstens eine Nut vorgesehen, entlang derer der Träger zur Bildung einer Airbagklappe beim Entfalten des Airbags aufbrechbar ist. Die Nut kann dabei verschiedene herkömmliche Verläufe, beispielsweise einen in der Draufsicht U-förmigen oder H-förmigen Verlauf aufweisen. Auch ist eine geradlinige Nut zur Bildung einer sogenannten fischmaulartigen Airbagklappe denkbar, wie sie beispielsweise in der DE 10 2006 016 724 oder der DE 101 47 547 A1 beschrieben sind.

Die Nut durchdringt den Träger nicht vollständig. Vielmehr liegt der Nutgrund der Nut in einem Abstand zur Vorderseite des Trägers, so dass die Vorderseite des Trägers in diesem Bereich vollständig geschlossen ist. Dabei sind durch das erfindungsgemäße Verfahren Abstände zwischen 0,2 mm und 2 mm, bevorzugt 0,5 mm und 1,5 mm, realisierbar. Die Stärke des Trägers in diesem Bereich beträgt vorteilhafterweise 2,5 mm und kleiner. Die Breite der Nut liegt vorzugsweise zwischen 1 mm bis 20 mm, kann aber auch größer ausgebildet sein. Ferner ist die Nut erfindungsgemäß werkzeugfallend eingebracht. "Werkzeugfallend" bedeutet diesbezüglich, dass das Spritzgussteil, das heißt der Träger, in Bezug auf die Nut fertig aus dem Spritzgießwerkzeug fällt und insbesondere nicht spanend nachbearbeitet werden muss. Darüber hinaus ist der Träger zumindest im Bereich der Nut mit dem erwähnten geschäumten Kern versehen. Durch Ausbildung des Trägers mit geschäumtem Kern im Bereich der Nut ist es möglich, die Kerbschlagzähigkeit und Bruchdehnung des Trägers so zu beeinflussen, dass das Material im Bereich der Nut leichter bricht. Dadurch muss die Nut nicht so tief in den Träger eingebracht werden, wie im Kompaktspritzguss üblich. Mit anderen Worten kann der Abstand des Nutgrunds zur Vorderseite des Trägers größer bleiben. Dadurch wird das Wandstärken-Rippen-Verhältnis positiv beeinflusst und die Nut kann werkzeugfallend ausgebildet werden. Auf der anderen Seite ermöglichen ein geschäumter Kern und insbesondere der Einsatz eines thermoplastischen Schaumgießverfahrens größere Wandstärken-Rippen-Verhältnisse. Damit kann auf die aufwändige Nachbebearbeitung bzw. nachträgliche Einbringung der Nut auch dann verzichtet werden, wenn die Nut den Träger nicht vollständig durchdringt.

Ein besonders vorteilhaftes Bruchverhalten ergibt sich dadurch, dass der Träger kohlefaserverstärkt ist oder graphenähnliche Nanoadditive enthält. Es wird vermutet, dass dies daran liegt, dass im Vergleich zu den bisher verwendeten Glasfasern keine oder weniger Büschelungen auftreten und die Kohlefasern oder graphenähnlichen Substanzen plan ausgerichtet angeordnet sind und sich dadurch insbesondere in Verbindung mit dem geschäumten Kern ein saubererer Bruch ergibt. Darüber hinaus kann es bei Verbindung des Trägers mit einer oder mehreren Schichten auf der Vorderseite unter Verwendung eines Wärme aktivierbaren Klebemittels vorteilhaft sein, Kohlfasern oder graphenähnliche Nanoadditive zu verwenden, da diese durch Mikrowellen erwärmt und damit den Träger heizen können, um die Klebemittelschicht beim Kaschieren darüberliegender Haptik- und/oder Dekorschichten zu aktivieren.

Ferner kann es vorteilhaft sein, den geschäumten Kern des Trägers zwischen Vorder- und Rückseite in Draufsicht in Bereiche unterschiedlicher Dichte zu unterteilen und insbesondere den Bereich, in dem die Nut liegt, mit einer niedrigeren Dichte zu gestalten als in den übrigen Bereichen. Dadurch kann optimal eingestellt werden, in welchen Bereichen der Träger besonders bruchfähig sein soll und in welchen er eine erhöhte Steifigkeit bzw. Festigkeit aufweisen kann und/oder muss. Dabei ist es besonders bevorzugt, die Dichte im Bereich der Nut zwischen 8% und 22% geringer als in den übrigen Bereichen zu gestalten.

Auch kann es vorteilhaft sein, einen Scharnierbereich in dem Träger vorzusehen, an dem die Airbagklappe beim Verschwenken am Träger scharnierbar gehalten wird und die Dichte in diesem Scharnierbereich höher als in dem Bereich der Nut und gegebenenfalls auch höher als in anderen Bereichen zu gestalten, um ein Abreißen der Airbagklappe beim Aufschwenken zu vermeiden. Alternativ oder zusätzlich ist es auch möglich, im Bereich des Scharniers eine Verstärkungsschicht, zum Beispiel in Form eines Netzes in den Träger einzugießen.

Darüber hinaus ist es im Stand der Technik vielfach bekannt, rückseitig einen sogenannten Schusskanal anzuschweißen oder anzukleben, welcher den Airbag beim Entfalten in Richtung der Airbagklappe bzw. deren Rückseite kanalisiert. Erfindungsgemäß ist es besonders bevorzugt, den Schusskanal integral, das heißt einstückig bzw. materialeinheitlich mit dem Träger auszubilden, das heißt im Spritzgießverfahren mit anzuformen. Dies ist insbesondere auch erst durch die Ausgestaltung des Trägers mit geschlossenen Außenhäuten und geschäumtem Kern und insbesondere bei Verwendung des thermoplastischen Schaumgießverfahrens möglich, da dadurch die erforderlichen Wandstärken-Rippenverhältnisse, die bei Anbindung des Schusskanals an die Rückseite der Trägers eingehalten werden müssen, realisierbar sind.

Des Weiteren ist es bevorzugt, die Nut im Querschnitt V-förmig mit zur Vorderseite gerichteter Spitze zu gestalten, da durch diesen Querschnitt ein gezielteres Bruchverhalten realisiert werden kann.

Darüber hinaus ist es bevorzugt, eine Dekorschicht und/oder eine Haptikschicht auf dem Träger aufzubringen, die im Bereich der Nut ungeschwächt sind. Für ungeschwächte Dekor- und/oder Haptikschichten wird auf die DE 10 2010 062 606 oder die DE 10 2008 033 584 A1 für weitergehende Informationen verwiesen. Dieser Aufbau wird auf einfachste Art und Weise realisiert, so dass ohne separate Verfahrensschritte zum Einbringen von Schwächungen in Träger-, Dekor- oder Haptikschicht ein Innenausstattungsteil mit hochwertigem Erscheinungsbild und integrierter Airbagklappe erzielt werden kann.

Weitere Merkmale und Vorteile der Erfindung, die alleinstehend oder in Kombination mit einem oder mehreren der obigen Merkmale umgesetzt werden können, finden sich in der folgenden Beschreibung einer bevorzugten Ausführungsform. Diese erfolgt unter Bezugnahme auf die begleitenden Zeichnungen, in denen
Figur 1 einen Querschnitt durch ein Innenausstattungsteil gemäß der vorliegenden Erfindung schematisch zeigt; und
Figur 2 eine schematische Draufsicht auf ein erfindungsgemäßes Innenausstattungsteil zeigt, wobei die Nut, ein Scharnierbereich sowie Bereiche unterschiedlicher Dichte schematisch angedeutet sind.

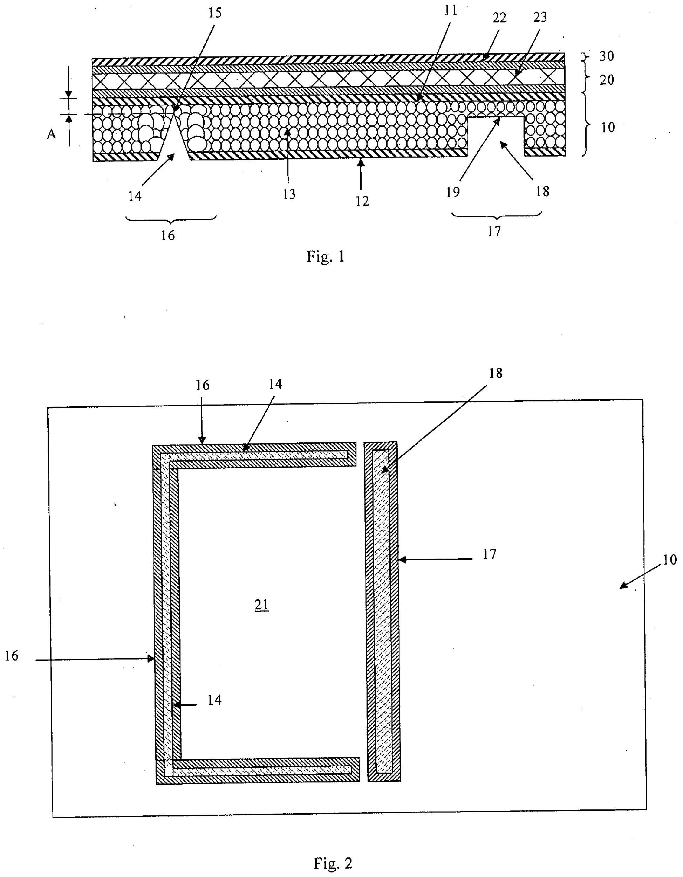

Figur 1 zeigt einen dreischichtigen Aufbau mit einem Träger 10, einer Haptikschicht 20 in Form eines Abstandsgewirkes und einer Dekorschicht 30, die aus Echtleder, Kunstleder oder anderen bekannten Dekormaterialien bestehen kann.

Der Träger 10 ist ein im MuCell^{®}-Verfahren spritzgegossener, steifer Träger, zum Beispiel aus Polypropylen. Er weist eine Vorderseite 11 und eine Rückseite 12 auf, die als geschlossene Außenhäute realisiert sind. Zwischen der Vorderseite 11 und der Rückseite 12 weist der Träger 10 einen mikrozellular geschäumten Kern 13 auf.

Von der Rückseite 12 her ist eine Nut 14 in den Träger eingebracht, deren Nutgrund 15 in einem Abstand A zur Vorderseite 11 endet. Die Nut 14 durchdringt den Träger 10 nicht vollständig. Die Nut 14 ist im Querschnitt, wie aus Figur 1 ersichtlich, V-förmig ausgestaltet, wobei die Spitze den Nutgrund 15 bildet und der Vorderseite 11 des Trägers 10 zugewandt ist.

Ferner weist der geschäumte Kern 13 des Trägers einen ersten Bereich mit einer ersten Dichte 16 auf, in welchem die Nut 14 platziert ist. Dieser Bereich 16 ist auch in der Draufsicht in Figur 2 erkennbar. Ferner ist ein zweiter Bereich 17 (siehe Figur 2) mit einer zweiten Dichte des geschäumten Kerns 13 vorgesehen. In diesem Bereich 17 ist ein Scharnierbereich 18 ausgebildet, der bei der dargestellten Ausführungsform in Form einer rechteckigen Nut gestaltet ist, welche ebenfalls werkzeugfallend ausgebildet ist und deren Nutgrund 19 in einem Abstand zur Vorderseite 11 des Trägers endet, diesen also nicht vollständig durchdringt. Die Nut 14 und der Scharnierbereich 18 begrenzen eine Airbagklappe 21. Zwischen dem Nutgrund 19 und der Vorderseite 11 kann zur weiteren Verstärkung des Scharnierbereichs eine nicht dargestellte Verstärkungslage, zum Beispiel in Form eines Netzes, welche von der Airbagklappe 21 über den Scharnierbereich 18 in den übrigen Teil des Trägers 10 verläuft, vorgesehen sein. Die erste Dichte des Bereichs 16 des geschäumten Kerns 13 weist eine niedrigere Dichte auf als die zweite Dichte im Bereich 17 und die Dichte in den übrigen Bereichen. Dadurch wird der Träger 10 im Bereich 16 poröser und folglich hinsichtlich seiner Kerbschlagzähigkeit und Bruchdehnung derart beeinflusst, dass er in diesem Bereich leichter bricht. Durch die höhere Dichte im Bereich 17 im Vergleich zum Bereich 16 und den übrigen Bereichen wird der Scharnierbereich, das heißt die Nut 18 hingegen verstärkt. In den übrigen Bereichen kann die Dichte gleich der zweiten Dichte, größer oder kleiner ausgestaltet sein, je nachdem wie es die Festigkeitsanforderungen erfordern.

Der Träger 10 ist darüber hinaus kohlefaserverstärkt oder enthält graphenähnliche Substanzen. Bei der dargestellten Ausführungsform weist der Träge 10 eine Stärke von etwa 2,5 mm auf. Die Restwandstärke A beträgt ungefähr 0,5 mm.

Die Haptikschicht 20 weist eine obere und untere Decklage 22 auf, die über Polfäden 23 entsprechend verbunden sind. Die Haptikschicht 20 kann z. B. eine Haptikschicht sein, wie sie in der DE 10 2010 062 606 A1 oder der DE 10 2008 033 584 A1 beschrieben ist. Sowohl die Haptikschicht 20 als auch die Dekorschicht 30 weisen vorzugsweise im Bereich der Nut 14, das heißt dem ersten Bereich 16 keine nachträglich eingebrachte Schwächung auf. Je nach verwendetem Material für das Dekor kann eine zusätzliche Schwächung hier jedoch erforderlich sein.

## Patentansprüche

1. Innenausstattungsteil, insbesondere Instrumententafel, für Fahrzeuge, insbesondere Kraftfahrzeuge, umfassend:
einen spritzgegossenen steifen Träger (10) mit einer Vorder- und Rückseite (11, 12),
wenigstens eine Nut (14) auf der Rückseite (12) des Trägers (10), entlang derer der Träger (10) zur Bildung einer Airbagklappe (21) aufbrechbar ist, wobei der Nutgrund (15) der Nut (14) in einem Abstand zur Vorderseite (11) des Trägers liegt, und die Nut (14) werkzeugfallend ausgebildet ist, und der Träger (10) zumindest im Bereich der Nut (14) einen geschäumten Kern (13) aufweist
**dadurch gekennzeichnet, dass**
die Vorder- und Rückseite (11, 12) des Trägers (10) die Form einer geschlossenen Außenhaut aufweisen, und der Träger (10) kohlefaserverstärkt ist oder graphenähnliche Nanoadditive enthält.

2. Innenausstattungsteil nach Anspruch 1, bei der der geschäumten Kern (13) des Trägers (10) zwischen Vorder- und Rückseite (11, 12) in Draufsicht Bereiche unterschiedlicher Dichte aufweist, wobei die Nut (14) in einem Bereich (16) mit niedrigerer Dichte als in einem anderen, insbesondere umgebenden Bereich liegt.

3. Innenausstattungsteil nach Anspruch 2, bei der die Dichte in dem Bereich (16) zwischen 8 und 22% geringer ist als in dem anderen Bereich.

4. Innenausstattungsteil nach Anspruch 2 oder 3, bei der der Träger (10) einen Scharnierbereich (18) für die Airbagklappe (21) aufweist, in dem die Dichte höher ist als in dem ersten Bereich (16) und/oder einem umgebenden Bereich.

5. Innenausstattungsteil nach einem der vorstehenden Ansprüche, ferner umfassend einen Schusskanal, der rückseitig mit dem Träger (10) verbunden ist, wobei der Schusskanal integral mit den Träger (10) ausgebildet ist.

6. Innenausstattungsteil nach einem der vorstehenden Ansprüche, bei dem der Abstand des Nutgrunds (15) der Nut (14) zur Vorderseite (11) des Trägers (10) zwischen 0,2 mm und 2 mm, bevorzugt zwischen 0,5 mm und 1,5 mm liegt.

7. Innenausstattungsteil nach einem der vorstehenden Ansprüche, ferner umfassend eine Dekorschicht (30) und/oder eine Haptikschicht (20) auf dem Träger (10), die im Bereich der Nut (14) ungeschwächt sind.

8. Innenausstattungsteil nach einem der vorstehenden Ansprüche, bei dem der Träger (10) ein thermoplastisches Schaumgussteil ist und insbesondere im physikalischen thermoplastischen Schaumgussverfahren hergestellt ist.

## Claims

1. Interior trim part, in particular instrument panel, for vehicles, comprising:
an injection-moulded rigid carrier (10) with a front side (11) and a rear side (12),
at least one groove (14) on the rear side (12) of the carrier (10), along which the carrier (10) can break open to form an airbag flap (21), wherein the groove base (15) of the groove (14) lies at a distance from the front side (11) of the carrier, and the groove (14) is fully formed from the mould, and the carrier (10) has a foamed core (13), at least in the region of the groove (14),
**characterized in that**
the front side (11) and the rear side (12) of the carrier (10) have the form of a closed outer skin, and the carrier (10) is reinforced with carbon fibres or contains graphene-like nanoadditives.

2. Interior trim part according to Claim 1, in which the foamed core (13) of the carrier (10) between the front side (11) and the rear side (12) has in plan view regions of different density, the groove (14) lying in a region (16) with a density lower than in another, in particular surrounding region.

3. Interior trim part according to Claim 2, in which the density in the region (16) is between 8 and 22% less than in the other region.

4. Interior trim part according to Claim 2 and 3, in which the carrier (10) has a hinge region (18) for the airbag flap (21), in which the density is higher than in the first region (16) and/or a surrounding region.

5. Interior trim part according to one of the preceding claims, further comprising a firing channel, which is connected on the rear side to the carrier (10), the firing channel being formed integrally with the carrier (10).

6. Interior trim part according to one of the preceding claims, in which the distance of the groove base (15) of the groove (14) from the front side (11) of the carrier (10) lies between 0.2 mm and 2 mm, preferably between 0.5 mm and 1.5 mm.

7. Interior trim part according to one of the preceding claims, further comprising a decorative layer (30) and/or a haptic layer (20) on the carrier (10), said layers being unweakened in the region of the groove (14).

8. Interior trim part according to one of the preceding claims, in which the carrier (10) is a thermoplastic foam-cast part and in particular is produced by the physical thermoplastic foam-casting process.

## Revendications

1. Pièce d'équipement intérieur, en particulier tableau de bord, pour véhicules, en particulier pour véhicules automobiles, comprenant :
un support rigide moulé par injection (10) avec un côté avant et un côté arrière (11, 12),
au moins une rainure (14) du côté arrière (12) du support (10), le long de laquelle le support (10) peut être rompu pour former un volet d'airbag (21), la base de rainure (15) de la rainure (14) étant située à distance du côté avant (11) du support, et la rainure (14) étant réalisée sous forme de pièce tombant de l'outil, et le support (10) présentant un noyau moussé (13) au moins dans la région de la rainure (14),
**caractérisée en ce que**
le côté avant et le côté arrière (11, 12) du support (10) présentent la forme d'une peau extérieure fermée et le support (10) est renforcé par des fibres de carbone ou contient des nanoadditifs à structure de graphène.

2. Pièce d'équipement intérieur selon la revendication 1, dans laquelle le noyau moussé (13) du support (10) présente entre le côté avant et le côté arrière (11, 12), en vue de dessus, des régions d'épaisseurs différentes, la rainure (14) étant située dans une région (16) de plus faible épaisseur que dans une autre région, notamment périphérique.

3. Pièce d'équipement intérieur selon la revendication 2, dans laquelle l'épaisseur dans la région (16) est inférieure de 8 à 22 % à l'épaisseur dans l'autre région.

4. Pièce d'équipement intérieur selon la revendication 2 ou 3, dans laquelle le support (10) présente une région de charnière (18) pour le volet d'airbag (21), dans laquelle l'épaisseur est plus importante que dans la première région (16) et/ou que dans une région périphérique.

5. Pièce d'équipement intérieur selon l'une quelconque des revendications précédentes, comprenant en outre un canal d'éjection qui est connecté du côté arrière au support (10), le canal d'éjection étant réalisé intégralement avec le support (10).

6. Pièce d'équipement intérieur selon l'une quelconque des revendications précédentes, dans laquelle la distance de la base de rainure (15) de la rainure (14) au côté avant (11) du support (10) est comprise entre 0,2 mm et 2 mm, de préférence entre 0,5 mm et 1,5 mm.

7. Pièce d'équipement intérieur selon l'une quelconque des revendications précédentes, comprenant en outre une couche décorative (30) et/ou une couche tactile (20) sur le support (10), qui ne sont pas affaiblies dans la région de la rainure (14).

8. Pièce d'équipement intérieur selon l'une quelconque des revendications précédentes, dans laquelle le support (10) est une pièce moulée en mousse thermoplastique et est fabriqué notamment par un procédé de moulage de mousse thermoplastique physique.
